# EUROPEAN PATENT APPLICATION

(11) **EP 4 624 310 A1**
(43) Date of publication of application: **01.10.2025**
(21) Application number: 24222785.8
(22) Date of filing: 23.12.2024
(51) Int. Cl.: B62D 21/15, B62D 25/02, B60K 1/04

(54) **VEHICLE LOWER PORTION STRUCTURE**

(30) Priority: 27.03.2024 JP 2024052493
(71) Applicant: TOYOTA JIDOSHA KABUSHIKI KAISHA, Aichi-ken, 471-8571 (JP)
(72) Inventor: MOTOI, Daisuke, TOYOTA-SHI, AICHI-KEN, 471-8571 (JP); TAKASAWA, Hideki, TOYOTA-SHI, AICHI-KEN, 471-8571 (JP)
(74) Representative: Cabinet Beau de Loménie

(57) **Abstract**

A vehicle lower portion structure includes: a first frame member (18) that is disposed at an end in a vehicle width direction in a lower portion of a vehicle, and includes a first absorbing member (24) with a hat-shaped cross-section in the first frame member; a second frame member (30) that is connected to a vehicle-width-direction inner side of the first frame member, and includes a second absorbing member (34) in the second frame member; and a cross member (36) that is disposed on a vehicle-width-direction inner side of the second frame member, extends in the vehicle width direction and is connected to the second frame member, wherein the first absorbing member (24), the second absorbing member (34) and the cross member (36) are disposed at positions that overlap each other in a side view of the vehicle.

## Description

### BACKGROUND OF THE INVENTION

### 1. Field of the Invention

The invention relates to a vehicle lower portion structure.

### 2. Description of Related Art

Japanese Unexamined Patent Application Publication No. 2019-137354 (JP 2019-137354 A) discloses a structure for a vehicle equipped with a battery case mounted under the floor of the vehicle, the structure having a first stiffener and a second stiffener in rockers (side sills) that are disposed on both sides of the battery case in the vehicle width direction.

### SUMMARY OF THE INVENTION

In the vehicle disclosed in JP 2019-137354 A, the rocker is deformed and the second stiffener having a hat-shaped cross-section is crushed in the event of a side collision, thereby absorbing part of a collision load. However, there is a possibility that the rocker and the second stiffener are not deformed into desired shapes, and there is room for improvement in stabilizing the ability to absorb a collision load in the event of a side collision.

The purpose of the invention is to obtain a vehicle lower portion structure capable of stably absorbing a collision load in the event of a side collision.

A vehicle lower portion structure according to claim 1 includes: a first frame member that is disposed at an end in a vehicle width direction in a lower portion of a vehicle, and includes a first absorbing member with a hat-shaped cross-section in the first frame member; a second frame member that is connected to a vehicle-width-direction inner side of the first frame member, and includes a second absorbing member in the second frame member; and a cross member that is disposed on a vehicle-width-direction inner side of the second frame member, extends in the vehicle width direction and is connected to the second frame member, wherein the first absorbing member, the second absorbing member and the cross member are disposed at positions that overlap each other in a side view of the vehicle.

In the vehicle lower portion structure according to claim 1, the first frame member is disposed at an end in the vehicle width direction in the lower portion of the vehicle, and the first absorbing member with a hat-shaped cross-section is provided in the first frame member. Moreover, the second frame member is connected to the vehicle-width-direction inner side of the first frame member, and the second absorbing member is provided in the second frame member. Further, the cross member extending in the vehicle width direction is disposed on the vehicle-width-direction inner side of the second frame member, and one end of the cross member is connected to the second frame member. Therefore, in the event of a side collision of the vehicle (hereinafter referred to as "in a side collision" as appropriate), the first absorbing member and the second absorbing member are deformed due to a collision load input to the vehicle, thereby absorbing at least part of the collision load. Furthermore, the collision load can be transmitted to the non-collided side through the first frame member, the second frame member and the cross member.

Moreover, since the first absorbing member, the second absorbing member and the cross member are disposed at positions that overlap each other in a side view of the vehicle, the first absorbing member and the second absorbing member are interposed between the cross member and a colliding object, and therefore, in comparison with a configuration in which a reaction force is not input from the cross member, the first absorbing member and the second absorbing member can be deformed more stably.

The vehicle lower portion structure according to claim 2 is based on claim 1, wherein the second absorbing member includes: a pair of upper and lower horizontal partition walls that are disposed spaced apart from each other in a vertical direction, and extend in the vehicle width direction to join inner walls of the second frame member; and a vertical partition wall that vertically joins the horizontal partition walls.

In the vehicle lower portion structure according to claim 2, the second absorbing member has a structure in which two chambers are provided in the vehicle width direction by the pair of upper and lower horizontal partition walls and the vertical partition wall. In this structure, the chambers are crushed sequentially from the chamber on the vehicle-width-direction outer side, and therefore, in comparison with a structure with no partition walls, the collision load can be more effectively absorbed.

The vehicle lower portion structure according to claim 3 is based on claim 2, wherein at least one of the pair of upper and lower horizontal partition walls has a fragile portion that is more fragile than other portions and is formed on an outer side in the vehicle width direction than the vertical partition wall.

In the vehicle lower portion structure according to claim 3, since the fragile portion is formed, the chamber on the vehicle-width-direction outer side in the second absorbing member can be deformed into a desired shape.

The vehicle lower portion structure according to claim 4 is based on claim 3, wherein the first absorbing member includes: a pair of upper and lower lateral wall portions extending outward in the vehicle width direction from the first frame member; and a vertical wall portion that vertically joins the lateral wall portions, and the pair of upper and lower lateral wall portions are respectively disposed at positions that overlap the horizontal partition walls of the second absorbing member in a side view of the vehicle.

In the vehicle lower portion structure according to claim 4, when a collision load is input, the load can be transmitted from the lateral wall portions to the cross member through the horizontal partition walls. Therefore, at least part of the collision load can be satisfactorily transmitted to the non-collided side before the first absorbing member and the second absorbing member are crushed.

The vehicle lower portion structure according to claim 5 is based on any one of claims 1 to 4, wherein the second frame member is a battery frame to which a battery case that is disposed in the lower portion of the vehicle and houses a battery is fastened, and the first frame member is a rocker extending in a vehicle front-rear direction.

In the vehicle lower portion structure according to claim 5, at least part of the collision load is absorbed as the first absorbing member and the second absorbing member are crashed, thereby reducing the transmission of the collision load to the battery case.

As described above, according to the vehicle lower portion structure of the invention, it is possible to stably absorb a collision load in the event of a side collision.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a main part enlarged cross-sectional view showing, in an enlarged manner, a main part of a vehicle lower portion structure according to an embodiment;
FIG. 2 is a main part enlarged cross-sectional view showing a state immediately after input of a collision load in a side collision;
FIG. 3 is a main part enlarged cross-sectional view showing a state after time has passed from the state of FIG. 2;
FIG. 4 is a main part enlarged cross-sectional view showing a state after time has passed from the state of FIG. 3;
FIG. 5 is a main part enlarged cross-sectional view showing a state after time has passed from the state of FIG. 4;
FIG. 6 is a cross-sectional view showing a battery frame according to a first modification; and
FIG. 7 is a cross-sectional view showing a battery frame according to a second modification.

### DETAILED DESCRIPTION OF EMBODIMENTS

A vehicle lower portion structure according to an embodiment will be described with reference to the drawings.

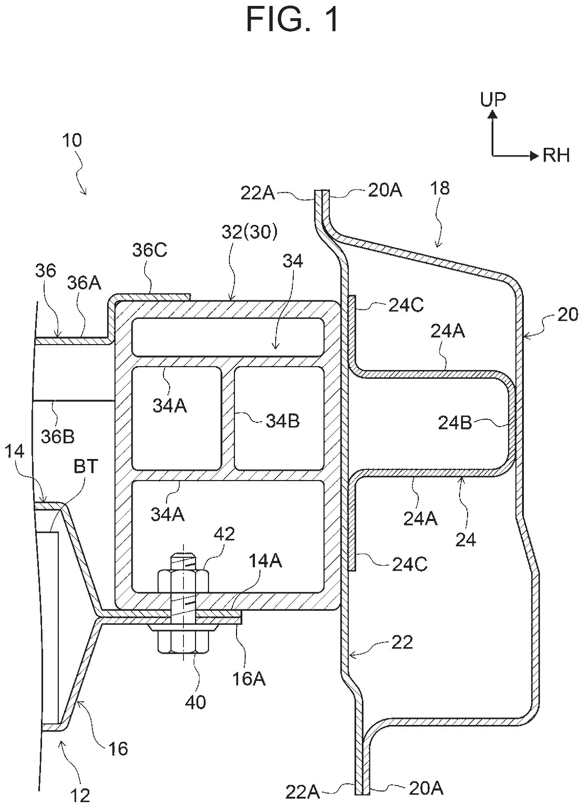

FIG. 1 is a main part enlarged cross-sectional view showing, in an enlarged manner, a main part of the vehicle lower portion structure according to the embodiment. Note that, an arrow UP and an arrow RH in the drawing indicate the vehicle upward direction and the vehicle rightward direction, respectively, of a vehicle 10 to which the vehicle lower portion structure is applied. Unless otherwise specified, the directions of front and rear, up and down, and left and right used in the following description indicate front and rear in a vehicle front-rear direction, up and down in a vehicle up-down direction, and left and right in a vehicle left-right direction (width direction), respectively.

As shown in FIG. 1, the vehicle lower portion structure of the present embodiment includes a battery case 12. The battery case 12 includes an upper case 14 and a lower case 16, and a battery BT is housed in the battery case 12.

The upper case 14 is formed in a substantially hat shape that is open on the vehicle lower side when viewed in a cross-section from the vehicle front-rear direction, and a vehicle right-side end of the upper case 14 has an upper-side flange 14A formed to overlap a lower surface of a later-described battery frame 30. Note that since the vehicle lower portion structure of the present embodiment is left-right symmetrical, only the configuration on the vehicle right side is illustrated and explained in the following description.

The lower case 16 is formed in a substantially hat shape that is open on the vehicle upper side when viewed in a cross-section from the vehicle front-rear direction, and the lower case 16 has a lower-side flange 16A formed at a vehicle right-side end to overlap the upper-side flange 14A of the upper case 14. Moreover, the upper-side flange 14A and the lower-side flange 16A are mechanically fastened to the later-described battery frame 30.

Note that, in one example of the present embodiment, a floor panel is not disposed, and the upper case 14 of the battery case 12 constitutes a floor surface of a vehicle cabin. However, the invention is not limited to this, and a floor panel may be provided on the vehicle upper side of the upper case 14.

A rocker 18 serving as a first frame member is disposed on the vehicle-width-direction outer side of the battery case 12. The rocker 18 is disposed at an end in the vehicle width direction in a lower portion of the vehicle, and is also a frame member having a closed cross-sectional structure including a rocker outer panel 20, a rocker inner panel 22 and a first absorbing member 24. Moreover, the rocker 18 extends in the vehicle front-rear direction, and a similar rocker is also disposed at an end on the vehicle left side.

The rocker outer panel 20 constitutes the vehicle-width-direction outer side of the rocker 18, and has a substantially hat-shaped cross-section that is open on the inner side in the vehicle width direction when viewed from the vehicle front-rear direction. Further, an outer-side flange 20A extending in the vehicle up-down direction is formed at an upper end and a lower end of the rocker outer panel 20.

The rocker inner panel 22 constitutes the vehicle-width-direction inner side of the rocker 18, and is formed in a substantially flat plate shape having a thickness direction along the vehicle width direction. Moreover, at an upper end and a lower end of the rocker inner panel 22, an inner-side flange 22A is formed to overlap the outer-side flange 20A, and the outer-side flange 20A and the inner-side flange 22A are joined together by welding or the like.

The first absorbing member 24 is disposed in a cross-section surrounded by the rocker outer panel 20 and the rocker inner panel 22, and is formed to have a substantially hat-shaped cross-section when viewed from the vehicle front-rear direction. Specifically, the first absorbing member 24 includes: a pair of upper and lower lateral wall portions 24A extending outward in the vehicle width direction from the rocker inner panel 22; and a vertical wall portion 24B that vertically joins the lateral wall portions 24A. Further, an extension portion 24C extending in the vertical direction along the rocker inner panel 22 is formed at a vehicle-width-direction inner side end of each lateral wall portion 24A.

The extension portion 24C on the upper side extends upward along the rocker inner panel 22, and is joined to the rocker inner panel 22 in an overlapped state. Furthermore, the extension portion 24C on the lower side extends downward along the rocker inner panel 22, and is joined to the rocker inner panel 22 in an overlapped state.

Note that, in an example of the present embodiment, the vertical wall portion 24B is adjacent to the rocker outer panel 20 or in contact with the rocker outer panel 20, but the invention is not limited to this. For example, a gap may be provided between the vertical wall portion 24B and the rocker outer panel 20.

The battery frame 30 serving as a second frame member is disposed on the vehicle-width-direction inner side of the rocker 18. The battery frame 30 is formed in a substantially frame shape to surround the periphery of the battery case 12, and has a closed cross-sectional structure.

The battery frame 30 includes a side frame 32 extending in the vehicle front-rear direction along the battery case 12, and the side frame 32 is fixed to the rocker 18. Specifically, the rocker inner panel 22 and the side frame 32 are overlapped and fastened together by a fastener such as a bolt (not shown).

The side frame 32 is formed to have a substantially rectangular cross-sectional shape when viewed from the vehicle front-rear direction, and the battery case 12 is fastened to the lower wall portion of the side frame 32. Specifically, the battery case 12 overlaps the lower surface of the side frame 32, and the battery case 12 is fastened to the side frame 32 by a bolt 40 and a nut 42.

A second absorbing member 34 is provided in the side frame 32. The second absorbing member 34 includes: a pair of upper and lower horizontal partition walls 34A that are disposed spaced apart from each other in the vertical direction, and extend in the vehicle width direction to join the inner walls of the battery frame 30; and a vertical partition wall 34B that vertically joins the horizontal partition walls 34A. In the present embodiment, as an example, the vertical partition wall 34B is provided at a position that equally divides the horizontal partition walls 34A in the vehicle width direction, but the invention is not limited to this.

The horizontal partition walls 34A and the vertical partition wall 34B of the second absorbing member 34 are formed to be thinner than a main body of the battery frame 30, and are configured to be more easily deformed than the main body of the battery frame 30.

A cross member 36 is disposed on the vehicle-width-direction inner side of the battery frame 30. The cross member 36 extends in the vehicle width direction, and connects the left and right battery frames 30 in the vehicle width direction. The cross member 36 includes: an upper wall portion 36A extending in the vehicle width direction and the vehicle front-rear direction; and front and rear wall portions 36B extending from the front end and rear end of the upper wall portion 36A, respectively, toward the vehicle lower side.

A joint portion 36C bent along the outer shape of the battery frame 30 is formed at one end in the vehicle width direction of the upper wall portion 36A of the cross member 36. The joint portion 36C overlaps the upper surface of the battery frame 30, and is joined to the battery frame 30 by welding or the like. Note that, the cross member 36 and the battery frame 30 may be mechanically fastened together by a bolt and a nut.

Here, the first absorbing member 24, the second absorbing member 34 and the cross member 36 are disposed at positions that overlap each other in a side view of the vehicle. In the present embodiment, as an example, the pair of upper and lower lateral wall portions 24A of the first absorbing member 24 are respectively located at the same heights as the horizontal partition walls 34A of the second absorbing member 34, and the lateral wall portions 24A and the horizontal partition walls 34A overlap each other in the side view of the vehicle.

Moreover, in the present embodiment, as an example, the front and rear wall portions 36B of the cross member 36 are located at the same heights as the lateral wall portions 24A of the first absorbing member 24 and the horizontal partition walls 34A of the second absorbing member 34, and the lateral wall portions 24A and the horizontal partition walls 34A overlap the front and rear wall portions 36B in the side view of the vehicle.

### Functions

Next, the functions of the vehicle lower portion structure of the present embodiment will be described.

In the vehicle lower portion structure of the present embodiment, the rocker 18 is disposed at an end in the vehicle width direction in the lower portion of the vehicle, and the first absorbing member 24 having a hat-shaped cross-section is provided in the rocker 18. Moreover, the battery frame 30 is connected to the vehicle-width-direction inner side of the rocker 18, and the second absorbing member 34 is provided in the battery frame 30. Further, the cross member 36 extending in the vehicle width direction is disposed on the vehicle-width-direction inner side of the battery frame 30, and one end of the cross member 36 is connected to the battery frame 30. Therefore, in the event of a side collision of the vehicle 10, the first absorbing member 24 and the second absorbing member 34 are deformed due to a collision load input to vehicle 10, thereby absorbing at least part of the collision load. Furthermore, the collision load can be transmitted to the non-collided side through the rocker 18, the battery frame 30 and the cross member 36.

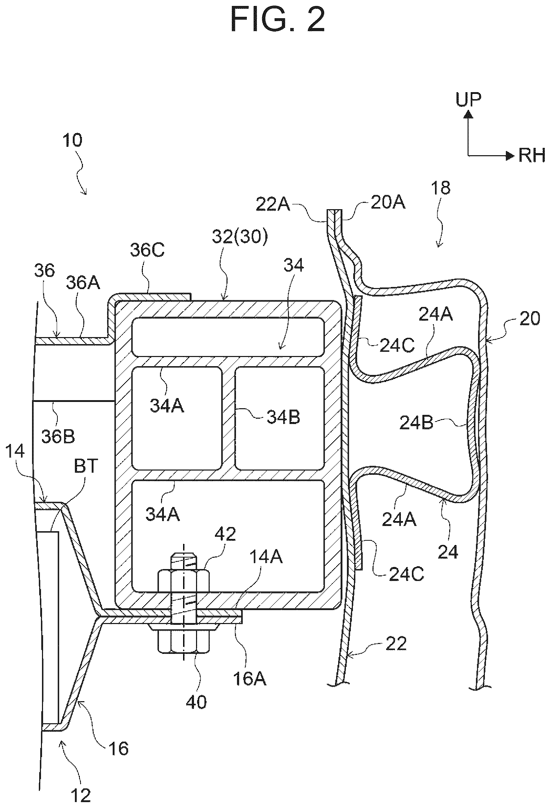

Moreover, in the present embodiment, since the first absorbing member 24, the second absorbing member 34 and the cross member 36 are disposed at positions that overlap each other in a side view of the vehicle, the first absorbing member 24 and the second absorbing member 34 are interposed between the cross member 36 and a colliding object. Therefore, in comparison with a configuration in which no reaction force is input from the cross member 36, the first absorbing member 24 and the second absorbing member 34 can be deformed more stably, and the collision load can be absorbed stably in the event of side collision. This function will be described with reference to FIG. 2 to FIG. 5.

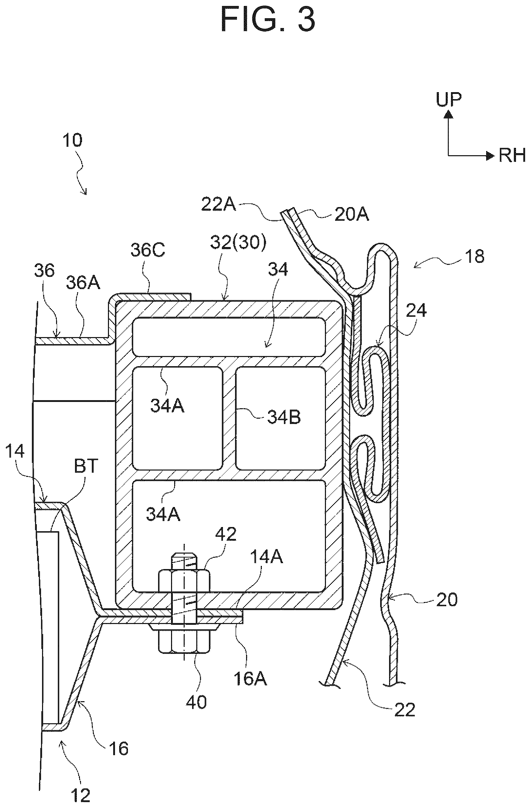

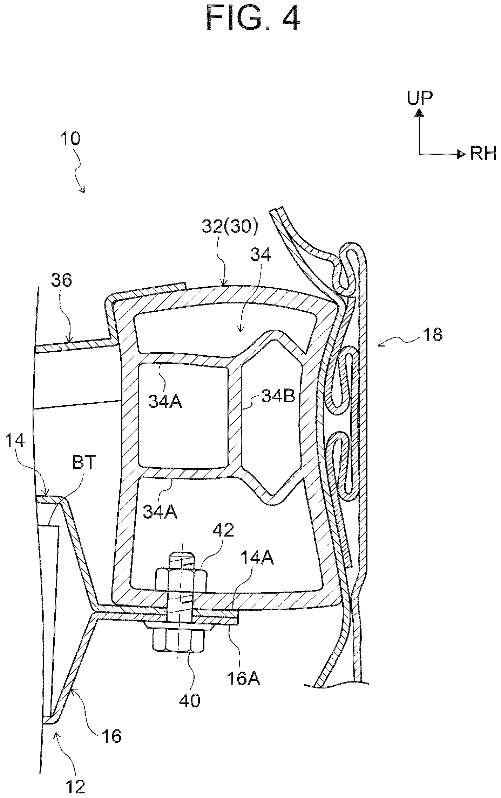

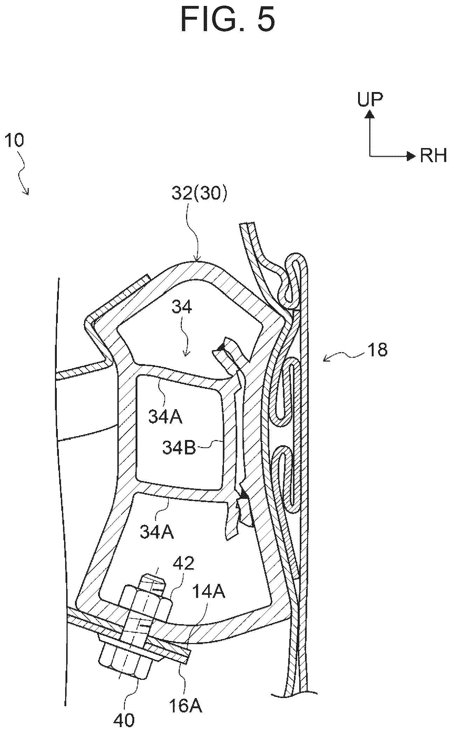

FIG. 2 is a main part enlarged cross-sectional view showing a state immediately after the input of the collision load in the side collision, and FIG. 3 is a main part enlarged cross-sectional view showing a state after time has passed from the state of FIG. 2. FIG. 4 is a main part enlarged cross-sectional view showing a state after time has passed from the state of FIG. 3, and FIG. 5 is a main part enlarged cross-sectional view showing a state after time has passed from the state of FIG. 4. Note that, in FIG. 2 to FIG. 5, as an example, the transition of deformation of the vehicle lower portion structure when a pole as a colliding object collides from the right side of the vehicle is explained, but illustration of the pole will be omitted for convenience of explanation.

As shown in FIG. 2, in the state immediately after the side collision, as the pole collides with the rocker outer panel 20 on the right side of the vehicle, the collision load is transmitted to the left side of the vehicle, and deformation of the rocker 18 starts. At this time, the lateral wall portion 24A of the first absorbing member 24 disposed in the rocker 18 is deformed to be folded, thereby absorbing part of the collision load.

When time has passed from the state of FIG. 2, as shown in FIG. 3, the rocker 18 and the first absorbing member 24 are interposed between the pole and the battery frame 30, and completely crushed.

Subsequently, when time has passed from the state of FIG. 3, as shown in FIG. 4, the deformation of the battery frame 30 starts. Specifically, the deformation takes place from the vehicle-width-direction outer side (collided side) of the second absorbing member 34. The second absorbing member 34 has a shape in which two chambers are formed side by side on the left and right sides by the pair of upper and lower horizontal partition walls 34A and the vertical partition wall 34B, and each of the horizontal partition walls 34A constituting the chamber on the vehicle-width-direction outer side is deformed to be folded.

Here, since the second absorbing member 34 is disposed at a position that overlaps the cross member 36 in a side view of the vehicle, the second absorbing member 34 can be stably deformed into a desired shape by being interposed between the pole and the cross member 36. Moreover, part of the collision load is absorbed by the deformation of the chamber on the vehicle-width-direction outer side.

When time has passed from the state of FIG. 4, as shown in FIG. 5, the chamber on the vehicle-width-direction outer side in the second absorbing member 34 is completely crushed, and deformation of the main body of the battery frame 30 and the chamber on the vehicle-width-direction inner side of the second absorbing member 34 starts. At this time, since the second absorbing member 34 is also interposed between the pole and the cross member 36, the second absorbing member 34 can be deformed into a desired shape, and part of the collision load is absorbed. Thus, in the present embodiment, since the chambers are crushed sequentially from the chamber on the vehicle-width-direction outer side, the collision load can be absorbed more effectively, in comparison with a structure with no partition walls.

Further, since the collision load that has not been absorbed by the rocker 18, the first absorbing member 24, the battery frame 30 and the second absorbing member 34 is transmitted to the non-collided side through the cross member 36, it is possible to effectively prevent an excessive collision load from being input to the battery case 12.

In particular, in the present embodiment, as shown in FIG. 1, the lateral wall portions 24A of the first absorbing member 24 are respectively disposed at the same heights as the horizontal partition walls 34A of the second absorbing member 34 in a side view of the vehicle. Therefore, in the event of a side collision, the collision load can be transmitted substantially linearly from the lateral wall portions 24A to the cross member 36 through the horizontal partition walls 34A, and at least part of the collision load can be satisfactorily transmitted to the non-collided side before the first absorbing member 24 and the second absorbing member 34 are crushed.

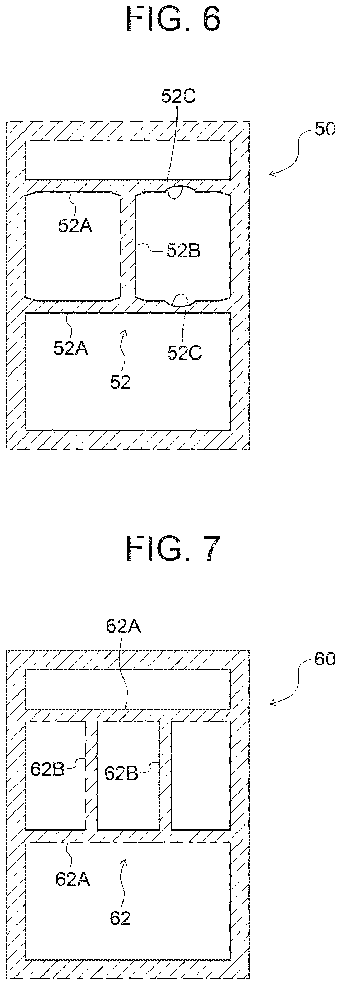

Note that, in the present embodiment, although the battery frame 30 has the shape shown in FIG. 1, the battery frame 30 is not limited to this, and may have other shapes. For example, the shapes shown in FIG. 6 and FIG. 7 may be adopted.

### First Modification

FIG. 6 is a cross-sectional view showing a battery frame 50 according to a first modification. In the present modification, the battery frame 50 has a second absorbing member 52 in a frame main body having a substantially rectangular cross-section.

The second absorbing member 52 includes: a pair of upper and lower horizontal partition walls 52A that are disposed spaced apart from each other in the vertical direction, and extend in the vehicle width direction to join the inner walls of the battery frame 50; and a vertical partition wall 52B that vertically joins the horizontal partition walls 52A.

Moreover, in the present modification, in each of the horizontal partition walls 52A, a fragile portion 52C is formed on the outer side in the vehicle width direction than the vertical partition wall 52B. The fragile portions 52C are formed to be thinner than other portions of the horizontal partition walls 52A, and the fragile portion 52C of the horizontal partition wall 52A disposed on the upper side is formed in a shape in which the lower surface is cut out. Further, the fragile portion 52C of the horizontal partition wall 52A disposed on the lower side is formed in a shape in which the upper surface is cut out.

According to the present modification, when a side collision load is input to the battery frame 50, the horizontal partition wall 52A on the upper side is deformed so as to be folded upward and the horizontal partition wall 52A on the lower side is deformed so as to be folded downward due to the fragile portions 52C. Thus, the second absorbing member 52 can be deformed into a desired shape.

### Second Modification

FIG. 7 is a cross-sectional view showing a battery frame 60 according to a second modification. In the present modification, the battery frame 60 has a second absorbing member 62 in a frame main body having a substantially rectangular cross-section.

The second absorbing member 62 includes: a pair of upper and lower horizontal partition walls 62A that are disposed spaced apart from each other in the vertical direction, and extend in the vehicle width direction to join the inner walls of the battery frame 60; and two vertical partition walls 62B that vertically join the horizontal partition walls 62A.

In the present modification, since the two vertical partition walls 62B are disposed at an equal pitch, a space surrounded by the main body of the battery frame 60 and the horizontal partition walls 62A is divided into three equal parts by the vertical partition walls 62B. Consequently, the second absorbing member 62 of the present modification has a shape in which three chambers are disposed side by side in the vehicle width direction.

According to the present modification, since the three chambers are deformed at different times, respectively, it is possible to absorb the collision load and prevent an excessive collision load from being input to the vehicle body. Note that, in the embodiment and the modifications, although the horizontal partition walls extending substantially perpendicularly to the inner walls of the battery frame are provided, the invention is not limited to this. For example, the horizontal partition walls may be inclined, or a horizontal partition wall extending diagonally from a corner between the right-side inner wall of the battery frame and the lower-side horizontal partition wall toward a corner between the left-side inner wall of the battery frame and the upper-side horizontal partition wall may be provided. On the contrary, a horizontal partition wall extending diagonally from a corner between the right-side inner wall of the battery frame and the upper-side horizontal partition wall toward a corner between the left-side inner wall of the battery frame and the lower-side horizontal partition wall may be provided.

Although the vehicle lower portion structure according to the embodiment has been described above, needless to say, the invention can be implemented in various ways within a range not departing from the gist of the invention. For example, in the embodiment, as shown in FIG. 1, although the lateral wall portions 24A of the first absorbing member 24 and the horizontal partition walls 34A of the second absorbing member 34 are disposed at the same heights, the invention is not limited to this. One lateral wall portion 24A and one horizontal partition wall 34A may be disposed at the same height, or the lateral wall portion 24A and the horizontal partition wall 34A may be displaced from each other in the height direction. Even in this case, the same effect is provided as long as the first absorbing member 24, the second absorbing member 34 and the cross member 36 are disposed at positions that overlap each other in a side view of the vehicle.

Moreover, in the embodiment, although the first absorbing member 24 is formed to have a substantially hat-shaped cross-section that is open on the inner side in the vehicle width direction, the invention is not limited to this. For example, a first absorbing member formed with a substantially hat-shaped cross-section that is open on the outer side in the vehicle width direction may be used.

Furthermore, in the embodiment, although the battery frame 30 to which the battery case 12 is fastened is used as the second frame member, the invention is not limited to this. For example, the invention may be applied to a structure with no battery case under the floor of a vehicle. In this case, the second frame member may be an impact-absorbing member extending in the vehicle front-rear direction along the rocker. The second frame member may be a member that functions as part of the rocker.

For the embodiment, the following appendices are disclosed.

### Appendix 1

A vehicle lower portion structure including:
a first frame member that is disposed at an end in a vehicle width direction in a lower portion of a vehicle, and includes a first absorbing member with a hat-shaped cross-section in the first frame member;
a second frame member that is connected to a vehicle-width-direction inner side of the first frame member, and includes a second absorbing member in the second frame member; and
a cross member that is disposed on a vehicle-width-direction inner side of the second frame member, extends in the vehicle width direction, and has one end connected to the second frame member, wherein
the first absorbing member, the second absorbing member and the cross member are disposed at positions that overlap each other in a side view of the vehicle.

### Appendix 2

The vehicle lower portion structure according to appendix 1, wherein the second absorbing member includes: a pair of upper and lower horizontal partition walls that are disposed spaced apart from each other in a vertical direction, and extend in the vehicle width direction to join inner walls of the second frame member; and a vertical partition wall that vertically joins the horizontal partition walls.

### Appendix 3

The vehicle lower portion structure according to appendix 2, wherein at least one of the pair of upper and lower horizontal partition walls has a fragile portion that is more fragile than other portions and is formed on an outer side in the vehicle width direction than the vertical partition wall.

### Appendix 4

The vehicle lower portion structure according to appendix 3, wherein
the first absorbing member includes: a pair of upper and lower lateral wall portions extending outward in the vehicle width direction from the first frame member; and a vertical wall portion that vertically joins the lateral wall portions, and
the pair of upper and lower lateral wall portions are respectively disposed at positions that overlap the horizontal partition walls of the second absorbing member in a side view of the vehicle.

### Appendix 5

The vehicle lower portion structure according to any one of appendices 1 to 4, wherein
the second frame member is a battery frame to which a battery case that is disposed in the lower portion of the vehicle and houses a battery is fastened, and
the first frame member is a rocker extending in a vehicle front-rear direction.

### Appendix 6

A vehicle having the vehicle lower portion structure according to any one of appendices 1 to 4.

## Claims

1. A vehicle lower portion structure including:
a first frame member (18) that is disposed at an end in a vehicle width direction in a lower portion of a vehicle, and includes a first absorbing member (24) with a hat-shaped cross-section in the first frame member;
a second frame member (30;50;60) that is connected to a vehicle-width-direction inner side of the first frame member, and includes a second absorbing member (34;52;62) in the second frame member; and
a cross member (36) that is disposed on a vehicle-width-direction inner side of the second frame member, extends in the vehicle width direction and is connected to the second frame member, wherein
the first absorbing member (24), the second absorbing member (34;52;62) and the cross member (36) are disposed at positions that overlap each other in a side view of the vehicle.

2. The vehicle lower portion structure according to claim 1, wherein the second absorbing member (34;52;62) includes: a pair of upper and lower horizontal partition walls (34A;52A;62A) that are disposed spaced apart from each other in a vertical direction, and extend in the vehicle width direction to join inner walls of the second frame member; and a vertical partition wall (34B;52B;62B) that vertically joins the horizontal partition walls.

3. The vehicle lower portion structure according to claim 2, wherein at least one of the pair of upper and lower horizontal partition walls (52A) has a fragile portion (52C) that is more fragile than other portions and is formed on an outer side in the vehicle width direction than the vertical partition wall.

4. The vehicle lower portion structure according to claim 3, wherein
the first absorbing member (24) includes: a pair of upper and lower lateral wall portions (24A) extending outward in the vehicle width direction from the first frame member; and a vertical wall portion (24B) that vertically joins the lateral wall portions, and
the pair of upper and lower lateral wall portions are respectively disposed at positions that overlap the horizontal partition walls (34A;52A;62A) of the second absorbing member (34;52;62) in a side view of the vehicle.

5. The vehicle lower portion structure according to any one of claims 1 to 4, wherein
the second frame member (30;50;60) is a battery frame to which a battery case that is disposed in the lower portion of the vehicle and houses a battery is fastened, and
the first frame member (18) is a rocker extending in a vehicle front-rear direction.
